# EUROPEAN PATENT SPECIFICATION

(11) **EP 2 517 326 B1**
(45) Date of publication and mention of the grant of the patent: **30.11.2016**
(21) Application number: 09801701.5
(22) Date of filing: 21.12.2009
(51) Int. Cl.: H02M 1/00, H02J 3/46

(54) **A CODED POWER CONVERTER SYSTEM**
CODIERTES LEISTUNGSWANDLERSYSTEM
SYSTÈME CONVERTISSEUR DE PUISSANCE CODÉ

(43) Date of publication of application: 31.10.2012
(73) Proprietor: Optis Wireless Technology, LLC, Plano, TX 75025 (US)
(72) Inventor: SANDER, Sverker, S-427 36 Billdal (SE); ARONSSON, Anders, S-451 96 Uddevalla (SE); STRANNE, Christian, S-463 71 Lödöse (SE)
(74) Representative: Grünecker Patent- und Rechtsanwälte PartG mbB
(86) International application number: PCT/EP2009/067668
(87) International publication number: WO 2011/076247

(56) References cited:
- WO-A2-2008/125915
- SERNIA P C ET AL: "Cascaded DC-DC Converter Connection of Photovoltaic Modules" IEEE TRANSACTIONS ON POWER ELECTRONICS, IEEE SERVICE CENTER, PISCATAWAY, NJ, US LNKD- DOI:10.1109/TPEL.2004.830090, vol. 19, no. 4, 1 July 2004 (2004-07-01), pages 1130-1139, XP011114988 ISSN: 0885-8993
- BARKLEY A ET AL: "Online Monitoring of Network Impedances Using Digital Network Analyzer Techniques" APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 440-446, XP031442716 ISBN: 978-1-4244-2811-3 cited in the application

## Description

### TECHNICAL FIELD

The present invention relates to a power converter system comprising at least a first power converter and a second power converter, where the first power converter comprises a first power converter input, a first power converter output and a first power converter control connection, and the second power converter comprises a second power converter input, a second power converter output and a second power converter control connection. The first power converter output is connected to the second power converter input, each power converter being arranged to output a certain predetermined voltage, where furthermore at least one power converter is arranged to generate a corresponding system signal which is output from the corresponding power converter output together with the corresponding predetermined voltage.

The present invention also relates to a method for controlling a power converter system which uses at least a first power converter and a second power converter, comprising the steps: generating at least one system signal at a corresponding power converter; and outputting said system signal together with a corresponding power converter output voltage.

### BACKGROUND

In power supplies for different applications, there are normally a number of power converters, such a power supply forming a power converting system.

Each power converter has an input and an output, where a certain input voltage is transformed to a certain output voltage. However, the output voltage may vary depending on deficiencies of the power converter in question. It is therefore desired to have a self-regulating power converter, which detects an output signal and regulates its output in dependence of the detected signal, such that the output voltage is retained at its desired magnitude.

Normally, a test signal is generated at a power converter as a test signal to measure its own or adjacent power converters' transfer functions. The test signal is injected in a control loop after its internal regulator (compensator). To minimize converter output voltage disturbances, and increase noise rejection at detection, the test signal is modulated as a random signal, for example with a pseudo random bit sequence (PRBS), prior to injection in the control loop.

This is for example disclosed in the IEEE article "Online monitoring of network impedances using digital network analyzer techniques" by Barkely and Santi at University of South Carolina, Department of electrical engineering.

However, the known technique does not incorporate methods for determining how the power converters are connected to each other. It does neither have the ability to discern test signals from multiple identical power converter hardwares from each other.

There is thus a need for a power converter system having a control function which enables identification of certain power converters and loads in the power converter system.

### SUMMARY

The object of the present invention is to provide a control function which enables identification of certain power converters and loads in the power converter system.

This object is obtained by means of a power converter system comprising the features of claim 1. According to an illustrative example, the power converter comprises a first power converter input, a first power converter output and a first power converter control connection, and the second power converter comprises a second power converter input, a second power converter output and a second power converter control connection. The first power converter output is connected to the second power converter input, each power converter being arranged to output a certain predetermined voltage, where furthermore at least one power converter is arranged to generate a corresponding system signal which is output from the corresponding power converter output together with the corresponding predetermined voltage. The system signal comprises identification information that enables determination of which power converter that has generated said system signal when said system signal is detected in the system.

This object is also obtained by means of a method for controlling a power converter system which uses at least a first power converter and a second power converter, as set forth by claim 10.

According to an illustrative example, the method comprises the steps of generating at least one system signal at a corresponding power converter; and outputting said system signal together with a corresponding power converter output voltage. Furthermore, identification information is comprised in the system signal, enabling determination of which power converter that has generated the system signal when it is detected in the system.

According to one example, at least one load, constituted by a power consuming device, is arranged for generating a system signal which comprises identification information that enables determination of which load that has generated said system signal when said system signal is detected in the system.

According to another example, at least one power converter and/or load comprises means for extraction of identification information.

According to another example, the system further comprises a control unit which is connected to at least the first power control connection and the second control connection, where furthermore the control unit is arranged to collect the extracted identification information.

According to another example, each power converter and/or load that is arranged to generate a system signal comprises a corresponding digital memory which in turn comprises corresponding identification information in the form of a unique digital number that is comprised in each corresponding system signal, and a corresponding pseudo random code generator which is arranged to generate a pseudo random digital code that is comprised in each corresponding system signal and an oscillator that is arranged for modulating the corresponding system signal such that it essentially only comprises AC-components, and means for XOR multiplication between the digital number and the pseudo random digital code and mixing means arranged for mixing the output from the means for XOR multiplication with the output from the oscillator.

Other examples are disclosed in the dependent claims.

A number of advantages are obtained by means of the present invention. For example:
- The unique identification information of each power converter and loads may be used to automatically identify how the individual power converters and loads are connected to each other in a power system.
- The unique identification information may also be used to detect spuriouses or exclude normally working power converters at power system fault conditions.

### BRIEF DESCRIPTION OF THE DRAWINGS

The present invention will now be described more in detail with reference to the appended drawings, where:
- Figure 1: shows a power converter system according to the present invention;
- Figure 2: shows a power converter according to the present invention;
- Figure 3: comprises four pairs of signals from Figure 2 presented graphically according to the present invention;
- Figure 4: shows an example of a larger power converter system according to the present invention; and
- Figure 5: shows a flowchart of a method according to the present invention.

### DETAILED DESCRIPTION

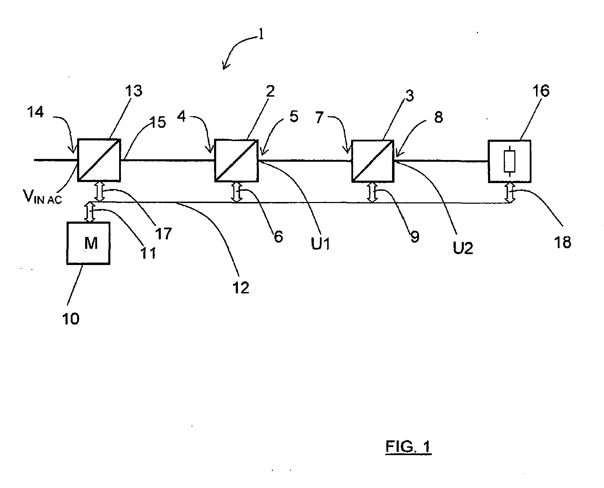

With reference to Figure 1, a power converter system 1 is shown, where the system comprises a first power converter 2 and a second power converter 3, where the first power converter 2 comprises a first power converter input 4, a first power converter output 5 and a first power converter control connection 6. The second power converter 3 comprises a second power converter input 7, a second power converter output 8 and a second power converter control connection 9.

Each power converter 2, 3 is arranged to output a certain predetermined voltage U1, U2. Furthermore, the system 1 comprises a control unit 10 which has a control unit control connection 11 that is connected to a data bus 12 that is connected to the first power control connection 6 and the second control connection 9, where the input is fed with an AC signal V_{IN AC}.

Since the power converter in this example is arranged to be connected to an AC power source such as a mains voltage, the system further comprises a third power converter 13 comprising a third power converter input 14 and a third power converter output 15 and a third power converter control connection 17. The third power converter output 15 is connected to the first power converter input 4.

The system is connected to a power consuming device 16 via the second power converter output 8. The power consuming device 16 is shown as a load, and may for example be constituted by an amplifier.

In order to explain the present invention, one power converter will now be described more in detail.

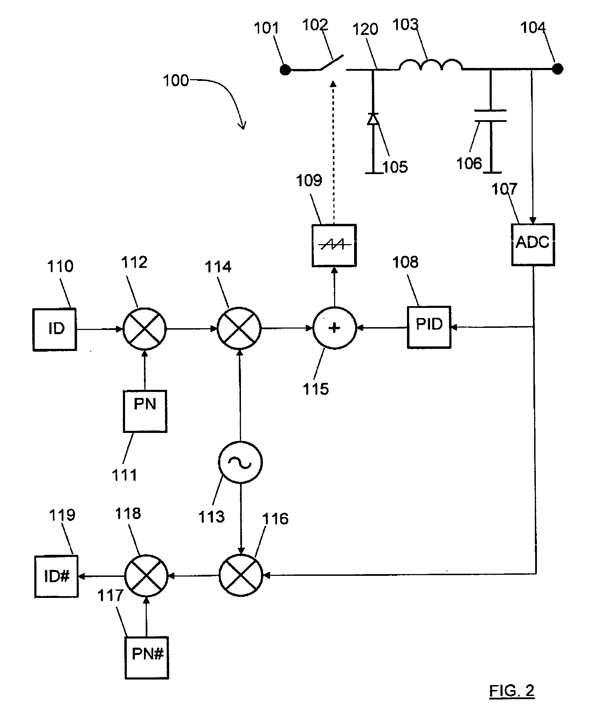

Figure 2 shows a power converter 100 according to the present invention, which for example may be constituted by the first power converter 2, the second power converter 3 or the third power converter 13.

It should be noted that, within the concept of the present invention, a part of the arrangement in Figure 2 may also be incorporated in the load 16, but with a slightly different system signal generating hardware. In this case, the load comprises a control connection 18.

The power converter 100 comprises an input 101, a switch 102, an inductor 103, and an output 104 which are serially connected, where furthermore the switch 102 is positioned between the input 101 and a switch node 120. The power converter further comprises a diode 105 which is connected between the switch node 120 and ground, and a capacitor 106 which is connected between the output 104 and ground.

A DC voltage U that is applied to the input 101 is converted to another DC voltage U' at the output 104 by duty cycle modulation of the switch 102. The modulated input voltage is filtered in the inductor 103 and the capacitor 106 with the inductor current free-wheeling in the diode 105 when the switch 102 is in its off position.

The output 104 is connected to an analog to digital converter (ADC) 107 which in turn is connected to an internal regulator 108. The internal regulator 108 controls a pulse width modulator 109.

The analog output DC voltage U' is converted to a digital value in an analog to digital converter 107. The output voltage is maintained constant by the internal regulator 108 controlling the duty cycle in the pulse width modulator 109. Thus the output voltage is held constant, regardless of load current or input voltage changes, by an internal control loop.

The power converter further comprises a first mixer 112 which has an output that is connected to a second mixer 114. A pseudo random code generator 111 is connected to the first mixer 112, and an oscillator 113 is connected to the second mixer 114.

A code for the power converter hardware is created during manufacturing, and may for example contain product data such as product number, revision, and serial number, followed by manufacturer site name and a time stamp. This code is unique and cannot be reused in other power converter hardware.

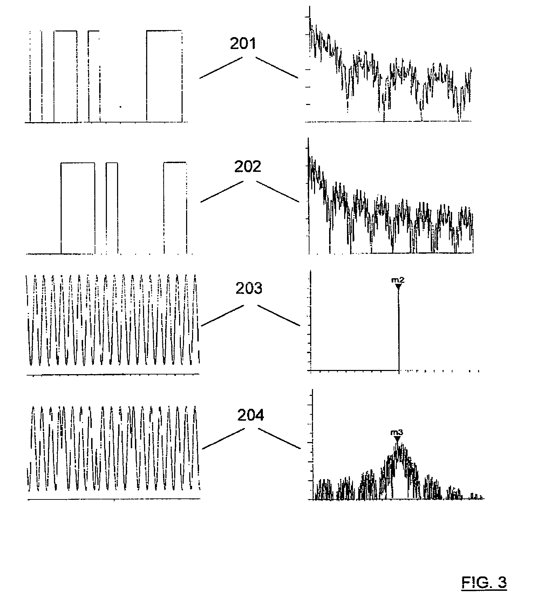

In the following description of the present invention, reference is also made to Figure 3. Figure 3 comprises four pairs of signals presented graphically. Each graphical pair shows the corresponding signal in the time domain, at the left, and in the frequency domain, at the right.

According to the present invention, the power converter 100 further comprises a memory 110 which is also is connected to a first mixer 112, where the memory 110 comprises the unique code which is outputted to the first mixer 112 as a binary sequence 201, where it is XOR multiplied with the output 202 of the pseudo random code generator 111.

The output from the first mixer 112, the XOR multiplication between the unique code 201 and the output 202 of the pseudo random code generator 111, is mixed with the output 203 from the oscillator 113, which preferably is a sinusoidal carrier tone 203, in the second mixer 114. By means of the mixing in the second mixer, the output 204 from the second mixer 114 is frequency shifted to an appropriate frequency band 204 with its DC component removed.

The signal that is output from the second mixer 114 constitutes a composite system signal 204 that is used for identification of the power converter at which it was generated.

The internal regulator 108 and the output of the second mixer 114 are connected to a combiner 115. The combined output is fed to the pulse width modulator 109. In this way, not only the internal regulator 108 controls the duty cycle of the pulse width modulator 109 but also the composite system signal 204. Thus the composite system signal 204 is superposed onto the power converter output voltage.

The composite system signal 204 is added to the DC output voltage within its output voltage tolerance band.

Since the unique code is XOR multiplied with the pseudo random code, it is possible to separate it from other codes when it is detected in adjacent power converters. The pseudo random code (PRBS) must not be unique, but should not be repeated within the power system it is used in. Preferable codes may be so-called 'Gold codes' to obtain good cross correlation while maintaining good auto correlation. Gold codes are product codes achieved by XOR multiplication of two maximum length sequences with the same length (factor codes).

The composite system signal 204 comprises identification information 201 that enables identification of which power converter that has generated said test signal 204 when said test signal 204 is detected in the system 1.

The power converter 100 according to Figure 2 also comprises a third mixer 116 that is connected to the ADC 107 and the oscillator 113, such that the received signal is mixed down from the oscillator frequency. The output of the third mixer 116 XOR multiplied with the pseudo random code generated by another pseudo random code generator in a fourth mixer 118, which fourth mixer 118 outputs the unique code 119.

In this way, each power converter equipped with such means in a power converter system, is simultaneously operating as a power generator and a detector in the system. The unique code is detected both internally and in all adjacent power converters. The information is collected by the control unit 10, which performs an analysis of all detected data.

By means of said analysis, the control unit 10 is arranged to determine the power connection configuration of the power converters in the system by means of analysis of each detected identification signal. The unique code may also be used to detect spuriouses or exclude normally working power converters at power system fault conditions. It is also possible that the control unit 10 is arranged to determine voltage, current and/or impedance transfer functions between different positions in the system for certain power converters, where the different position are constituted by the control connections 6, 9 where signals are detected and fed to the control unit 10.

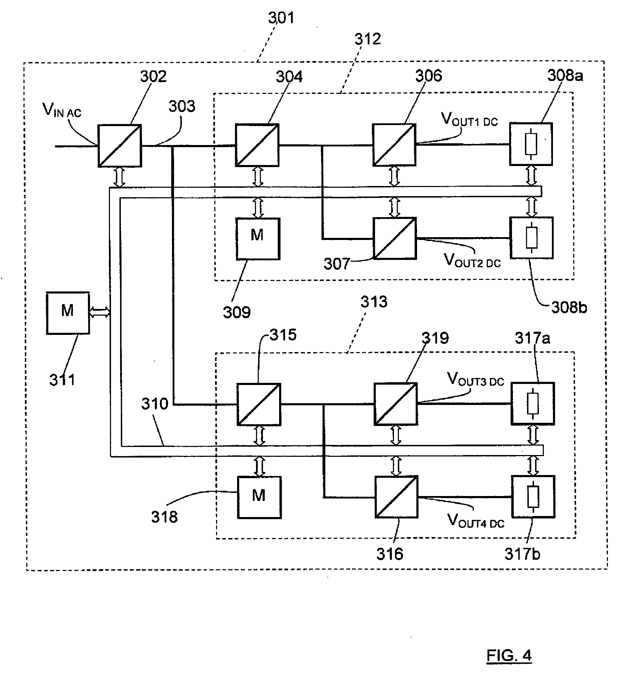

An example of a larger power converter system is shown in Figure 4, which discloses a power converter system 301 comprising a first DC power converting block 312 and a second DC power converting block 313. The first DC power converting block 312 comprises three power converters 304, 306, 307 and outputs two DC voltages V_{OUT1 DC}, V_{OUT2 DC} to corresponding power consuming devices 308a, 308b. The second DC power converting block 313 comprises three power converters 315, 316, 319 and outputs two DC voltages V_{OUT3 DC}, V_{OUT4 DC} to corresponding power consuming devices 317a, 317b.

The power converter system 301 comprises an AC/DC converter 302 at the input, where an input AC voltage V_{IN AC} is converted to an intermediate DC voltage at the output, where an output connection 303 from the AC/DC converter 302 is divided to the first DC power converting block 312 and the second DC power converting block 313.

By means of corresponding control connections, the power converters 304, 306, 307; 315, 316, 319 are connected to a data bus 310 which in turn is connected to a control unit 311 in the same way as in the previous example. Here, each DC power converting block also comprises a control unit 309, 318 each, which control units 309, 318 also are connected to the data bus 310.

The essence of the present invention is that at least one power converter in a power converter system generates a system signal that comprises a unique identification code, that enables tracing of said system signal, which in turn enables determining of transfer functions between the power converter where the system signal was generated and certain predetermined positions in the power converter system. These predetermined positions are preferably at other power converters or loads in the system, which other power converters are arranged to detect and decode the system signal.

A load may also be arranged for generating such a system signal. Then a load, constituted by a power consuming device 16, is arranged for generating a system signal 204 which comprises identification information 201 that enables determination of which load that has generated said system signal 204 when said system signal 204 is detected in the system 1. In this context, a load should be regarded as a part of the power converter system.

Then, also, the description of the arrangements regarding systems signal generation and detection at the power converters described above, is applicable to the load or loads in question.

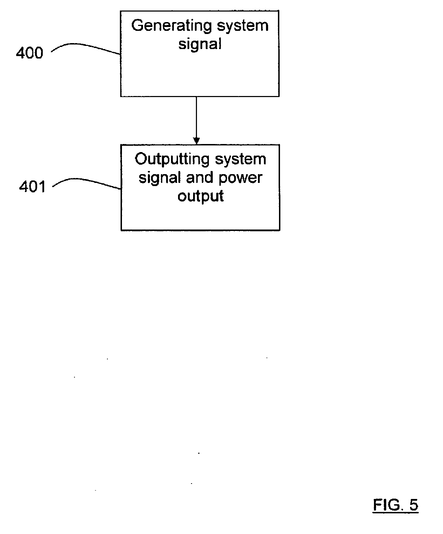

With reference to Figure 5, the present invention also relates to a method for controlling a power converter system 1 which uses at least a first power converter 2 and a second power converter 3, comprising the steps:
400: generating at least one system signal (204) at a corresponding power converter; and
401: outputting said system signal (204) together with a corresponding power converter output voltage, where
   identification information 201 is comprised in the system signal 204, enabling determination of which power converter that has generated the system signal 204 when it is detected in the system 1.

The present invention is not limited to the examples described above, but may vary freely within the scope of the appended claims. For example, the control unit may of course be arranged to detect signals at many different positions in a power converter system.

The identification does not have to take place in the power converters, but may take place where it is suitable in the system, for example in the control unit 10, which performs an analysis of the detected signal from the control connections 6, 9.

The power converter may have any suitable size, with any number of power converters. In order for a meaningful use of the present invention, the power converter system should comprise at least two power converters.

## Claims

1. A power converter system (1) comprising at least a first power converter (2) and a second power converter (3), where the first power converter (2) comprises a first power converter input (4), a first power converter output (5) and a first power converter control connection (6), and the second power converter (3) comprises a second power converter input (7), a second power converter output (8) and a second power converter control connection (9), where the first power converter output (5) is connected to the second power converter input (7), each power converter (2, 3) being arranged to output a certain predetermined voltage (U1, U2), where furthermore at least one power converter (2, 3) is arranged to generate a corresponding system signal (204) which is output from the corresponding power converter output (5, 8) together with the corresponding predetermined voltage (U1, U2), wherein each power converter (2, 3) and at least one load (16) comprises a corresponding digital memory (110), which in turn comprises corresponding identification information in the form of a unique digital number (201) that is comprised in each corresponding system signal (204), wherein the unique digital number (201) enables the determination of which power converter generated said system signal (204) when said system signal (204) is detected in the system (1).

2. A power converter system according to claim 1, **characterized in that** the at least one load, constituted by a power consuming device (16), is arranged for generating a system signal (204) which comprises identification information in the form of a unique digital number (201) that enables determination of which load that has generated said system signal (204) when said system signal (204) is detected in the system (1).

3. A power converter system according to any one of the claims 1 or 2, **characterized in that** the at least one power converter (2, 3) and the at least one load comprises means (117, 118, 119) for extraction of identification information in the form of a unique digital number (201).

4. A power converter system according to claim 3, **characterized in that** the system (1) further comprises a control unit (10) which is connected to at least the first power control connection (6) and the second control connection (9), where furthermore the control unit (10) is arranged to collect the extracted identification information in the form of a unique digital number (201).

5. A power converter system according to claim 4, **characterized in that** the control unit (10) is arranged to determine the connection configuration of the power converters and loads in the system by means of analysis of each detected system signal.

6. A power converter system according to claim 5, **characterized in that** the control unit (10) is arranged to determine voltage, current and/or impedance transfer functions between different positions in the system.

7. A power converter system according to any one of the preceding claims, **characterized in that** each power converter (2, 3) and the at least one load (16) that is arranged to generate a system signal (204) comprises a corresponding pseudo random code generator (111) which is arranged to generate a pseudo random digital code (202) that is comprised in each corresponding system signal (204).

8. A power converter system according to any one of the preceding claims, **characterized in that** each power converter (2, 3) and the at least one load (16) that is arranged to generate a system signal (204) comprises an oscillator (113) that is arranged for modulating the corresponding system signal such that it essentially only comprises AC-components.

9. A power converter system according to the claims 7-8, **characterized in that** each power converter (2, 3) and the at least one load (16) that is arranged to generate a system signal (204) comprises means (112) for XOR multiplication between the digital code (201) and the pseudo random digital code (202) and mixing means (114) arranged for mixing the output from the means (112) for XOR multiplication with the output from the oscillator (113).

10. A method for controlling a power converter system (1) which uses at least a first power converter (2) and a second power converter (3), comprising the steps: (400) generating at least one system signal (204) at a corresponding power converter; and (401) outputting said system signal (204) together with a corresponding power converter output voltage; providing to each power converter (2, 3) and at least one load a corresponding digital memory (110), which in turn comprises corresponding identification information in the form of a unique digital number (201) that is comprised in the corresponding system signal (204), thus enabling determination of which power converter that has generated the system signal (204) when it is detected in the system (1).

11. A method according to claim 10, **characterized in that** the at least one load, constituted by a power consuming device (16), is used for generating a system signal (204) with identification information in the form of a unique digital number (201) that enables determination of which load that has generated said system signal (204) when said system signal (204) is detected in the system (1).

12. A method according to any one of the claims 10 or 11, **characterized in that** the at least one power converter (2, 3) and the at least one load is used for extracting identification information in the form of a unique digital number (201).

13. A method according to claim -12, **characterized in that** a control unit (10) is used for collecting the extracted identification information in the form of a unique digital number (201).

14. A method according to claim 13, **characterized in that** the control unit (10) is used for determining the connection configuration of the power converters in the system by means of analysis of each detected system signal.

15. A method according to claim 14, **characterized in that** the control unit (10) is used for determining voltage, current and/or impedance transfer functions between different positions in the system.

## Patentansprüche

1. Leistungswandlersystem (1), das wenigstens einen ersten Leistungswandler (2) und einen zweiten Leistungswandler (3) umfasst, wobei der erste Leistungswandler (2) einen ersten Leistungswandlereingang (4), einen ersten Leistungswandlerausgang (5) und eine erste Leistungswandler-Steuerverbindung (6) umfasst und der zweite Leistungswandler (3) einen zweiten Leistungswandlereingang (7), einen zweiten Leistungswandlerausgang (8) und eine zweite Leistungswandler-Steuerverbindung (9) umfasst, wobei der erste Leistungswandlerausgang (5) mit dem zweiten Leistungswandlereingang (7) verbunden ist, wobei jeder Leistungswandler (2, 3) angeordnet ist, um eine bestimmte vorbestimmte Spannung (U1, U2) auszugeben, wobei weiterhin wenigstens ein Leistungswandler (2, 3) angeordnet ist, um ein entsprechendes Systemsignal (204) zu erzeugen, das von dem entsprechenden Leistungswandlerausgang (5, 8) zusammen mit der entsprechenden vorbestimmten Spannung (U1, U2) ausgegeben wird, wobei jeder Leistungswandler (2, 3) und wenigstens eine Last (16) einen entsprechenden digitalen Speicher (110) umfassen, der wiederum entsprechende Identifikationsinformationen in der Form einer einzigartigen digitalen Nummer (201), die in jedem entsprechenden Systemsignal (204) enthalten ist, umfasst, wobei die einzigartige digitale Nummer (201) die Bestimmung, welcher Leistungswandler das Systemsignal (204) erzeugt hat, ermöglicht, wenn das Systemsignal (204) in dem System (1) erfasst wird.

2. Leistungswandlersystem nach Anspruch 1, **dadurch gekennzeichnet, dass** die wenigstens eine Last, die durch ein Leistung verbrauchendes Gerät (16) gebildet wird, angeordnet ist, um ein Systemsignal (204) zu erzeugen, das Identifikationsinformationen in der Form einer einzigartigen digitalen Nummer (201) enthält, die die Bestimmung, welche Last das Systemsignal (204) erzeugt hat, ermöglicht, wenn das Systemsignal (204) in dem System (1) erfasst wird.

3. Leistungswandlersystem nach einem der Ansprüche 1 oder 2, **dadurch gekennzeichnet, dass** der wenigstens eine Leistungswandler (2, 3) und die wenigstens eine Last Einrichtungen (117, 118, 119) für eine Extraktion von Identifikationsinformationen in der Form einer einzigartigen digitalen Nummer (201) umfassen.

4. Leistungswandlersystem nach Anspruch 3, **dadurch gekennzeichnet, dass** das System (1) weiterhin eine Steuereinheit (10) umfasst, die mit wenigstens der ersten Leistungssteuerverbindung (6) und der zweiten Steuerverbindung (9) verbunden ist, wobei die Steuereinheit (10) angeordnet ist, um die extrahierten Identifikationsinformationen in der Form einer einzigartigen digitalen Nummer (201) zu sammeln.

5. Leistungswandlersystem nach Anspruch 4, **dadurch gekennzeichnet, dass** die Steuereinheit (10) angeordnet ist, um die Verbindungskonfiguration der Leistungswandler und Lasten in dem System mittels einer Analyse jedes erfassten Systemsignals zu bestimmen.

6. Leistungswandlersystem nach Anspruch 5, **dadurch gekennzeichnet, dass** die Steuereinheit (10) angeordnet ist, um Spannungs-, Strom- und/oder Impedanzübertragungsfunktionen zwischen verschiedenen Positionen in dem System zu bestimmen.

7. Leistungswandlersystem nach einem der vorstehenden Ansprüche, **dadurch gekennzeichnet, dass** jeder Leistungswandler (2, 3) und die wenigstens eine Last (16), die angeordnet sind, um ein Systemsignal (204) zu erzeugen, einen entsprechenden Pseudozufallscodegenerator (111) umfassen, der angeordnet ist, um einen Pseudozufallsdigitalcode (202) zu erzeugen, der in jedem entsprechenden Systemsignal (204) enthalten ist.

8. Leistungswandlersystem nach einem der vorstehenden Ansprüche, **dadurch gekennzeichnet, dass** jeder Leistungswandler (2, 3) und die wenigstens eine Last (16), die angeordnet sind, um ein Systemsignal (204) zu erzeugen, einen Oszillator (113) umfassen, der angeordnet ist, um das entsprechende Systemsignal derart zu modulieren, dass es im Wesentlichen Wechselstromkomponenten enthält.

9. Leistungswandlersystem nach einem der Ansprüche 7-8, **dadurch gekennzeichnet, dass** jeder Leistungswandler (2, 3) und die wenigstens eine Last (16), die angeordnet sind, um ein Systemsignal (204) zu erzeugen, Einrichtungen (112) für eine XODER-Multiplikation zwischen dem digitalen Code (201) und dem Pseudozufallsdigitalcode (202) und Mischeinrichtungen (114), die angeordnet sind, um die Ausgabe aus den Einrichtungen (112) für eine XODER-Multiplikation mit der Ausgabe aus dem Oszillator (113) zu mischen, umfassen.

10. Verfahren zum Steuern eines Leistungswandlersystems (1), das wenigsten einen ersten Leistungswandler (2) und einen zweiten Leistungswandler (3) verwendet, wobei das Verfahren die folgenden Schritte umfasst: (400) Erzeugen wenigstens eines Systemsignals (204) an einem entsprechenden Leistungswandler; und (401) Ausgeben des Systemsignals (204) zusammen mit einer entsprechenden Leistungswandler-Ausgangsspannung;
Vorsehen, für jeden Leistungswandler (2, 3) und wenigstens eine Last, eines entsprechenden digitalen Speichers (110), der wiederum entsprechende Identifikationsinformationen in der Form einer einzigartigen digitalen Nummer (201), die in dem entsprechenden Systemsignal (204) enthalten ist, umfasst, um die Bestimmung, welcher Systemwandler das Systemsignal (204) erzeugt hat, zu ermöglichen, wenn dieses in dem System (1) erfasst wird.

11. Verfahren nach Anspruch 10, **dadurch gekennzeichnet, dass** die wenigstens eine Last, die durch eine Strom verbrauchende Einrichtung (16) gebildet wird, verwendet wird, um ein Systemsignal (204) mit Identifikationsinformationen in der Form einer einzigartigen digitalen Nummer (201) zu erzeugen, die die Bestimmung, welche Last das Systemsignal (204) erzeugt hat, zu ermöglichen, wenn das Systemsignal (204) in dem System (1) erfasst wird.

12. Verfahren nach einem der Ansprüche 10 oder 11, **dadurch gekennzeichnet, dass** der wenigstens eine Leistungswandler (2, 3) und die wenigstens eine Last für die Extraktion von Identifikationsinformationen in der Form einer einzigartigen digitalen Nummer (201) verwendet werden.

13. Verfahren nach Anspruch 12, **dadurch gekennzeichnet, dass** eine Steuereinheit (10) verwendet wird, um die extrahierten Identifikationsinformationen in der Form einer einzigartigen digitalen Nummer (201) zu sammeln.

14. Verfahren nach Anspruch 13, **dadurch gekennzeichnet, dass** die Steuereinheit (10) verwendet wird, um die Verbindungskonfiguration der Leistungswandler in dem System mittels einer Analyse jedes erfassten Systemsignals zu bestimmen.

15. Verfahren nach Anspruch 14, **dadurch gekennzeichnet, dass** die Steuereinheit (10) verwendet wird, um Spannungs-, Strom- und/oder Impedanzübertragungsfunktionen zwischen verschiedenen Positionen in dem System zu bestimmen.

## Revendications

1. Système convertisseur de puissance (1) comprenant au moins un premier convertisseur de puissance (2) et un second convertisseur de puissance (3), où le premier convertisseur de puissance (2) comprend une entrée de premier convertisseur de puissance (4) une sortie de premier convertisseur de puissance (5) et une connexion de commande de premier convertisseur de puissance (6), et le second convertisseur de puissance (3) comprend une entrée de second convertisseur de puissance (7), une sortie de second convertisseur de puissance (8) et une connexion de commande de second convertisseur de puissance (9), où la sortie du premier convertisseur de puissance (5) est connectée à l'entrée du second convertisseur de puissance (7), chaque convertisseur de puissance (2, 3) étant agencé pour fournir en sortie une certaine tension prédéterminée (U1, U2), où de plus, au moins un convertisseur de puissance (2, 3) est agencé pour générer un signal de système correspondant (204) qui est fourni en sortie par la sortie du convertisseur de puissance correspondant (5, 8) en même temps que la tension prédéterminée correspondante (U1, U2), dans lequel chaque convertisseur de puissance (2, 3) et au moins une charge (16) comprennent une mémoire numérique correspondante (110) qui comprend elle-même des informations d'identification correspondantes sous la forme d'un nombre numérique unique (201) qui est compris dans chaque signal de système correspondant (204), dans lequel le nombre numérique unique (201) permet la détermination du convertisseur de puissance qui a généré ledit signal de système (204) lorsque ledit signal de système (204) est détecté dans le système (1).

2. Système convertisseur de puissance selon la revendication 1, **caractérisé en ce que** l'au moins une charge, constituée d'un dispositif de consommation de puissance (16), est agencée pour générer un signal de système (204) qui comprend des informations d'identification sous la forme d'un nombre numérique unique (201) qui permet la détermination de la charge qui a généré ledit signal de système (204) lorsque ledit signal de système (204) est détecté dans le système (1).

3. Système convertisseur de puissance selon l'une quelconque des revendications 1 ou 2, **caractérisé en ce que** l'au moins un convertisseur de puissance (2, 3) et l'au moins une charge comprend un moyen (117, 118, 119) pour l'extraction d'informations d'identification sous la forme d'un nombre numérique unique (201).

4. Système convertisseur de puissance selon la revendication 3, **caractérisé en ce que** le système (1) comprend en outre une unité de commande (10) qui est connectée à au moins la première connexion de commande de puissance (6) et la seconde connexion de commande (9), où de plus, l'unité de commande (10) est agencée pour recueillir les informations d'identification extraites sous la forme d'un nombre numérique unique (201).

5. Système convertisseur de puissance selon la revendication 4, **caractérisé en ce que** l'unité de commande (10) est agencée pour déterminer la configuration de connexion des convertisseurs de puissance et des charges dans le système au moyen d'une analyse de chaque signal de système détecté.

6. Système convertisseur de puissance selon la revendication 5, **caractérisé en ce que** l'unité de commande (10) est agencée pour déterminer des fonctions de transfert de tension, de courant et/ou d'impédance entre des positions différentes dans le système.

7. Système convertisseur de puissance selon l'une quelconque des revendications précédentes, **caractérisé en ce que** chaque convertisseur de puissance (2, 3) et l'au moins une charge (16) qui est agencée pour générer un signal de système (204) comprennent un générateur de code pseudo-aléatoire correspondant (111) qui est agencé pour générer un code numérique pseudo-aléatoire (202) qui est compris dans chaque signal de système correspondant (204).

8. Système convertisseur de puissance selon l'une quelconque des revendications précédentes, **caractérisé en ce que** chaque convertisseur de puissance (2, 3) et l'au moins une charge (16) qui est agencée pour générer un signal de système (204) comprennent un oscillateur (113) qui est agencé pour moduler le signal de système correspondant de façon qu'il ne soit constitué sensiblement que de composantes en courant alternatif.

9. Système convertisseur de puissance selon les revendications 7 à 8, **caractérisé en ce que** chaque convertisseur de puissance (2, 3) et l'au moins une charge (16) qui est agencée pour générer un signal de système (204) comprennent un moyen (112) pour effectuer une multiplication OU EXCLUSIF entre le code numérique (201) et le code numérique pseudo-aléatoire (202) et un moyen de mélange (114) agencé pour mélanger la sortie du moyen (112) de multiplication OU EXCLUSIF avec la sortie de l'oscillateur (113).

10. Procédé pour commander un système convertisseur de puissance (1) qui utilise au moins un premier convertisseur de puissance (2) et un second convertisseur de puissance (3), comprenant les étapes suivantes : (400) génération d'au moins un signal de système (204) au niveau d'un convertisseur de puissance correspondant ; et (401) fourniture en sortie dudit signal de système (204) en même temps qu'une tension de sortie de convertisseur de puissance correspondante ; fourniture à chaque convertisseur de puissance (2, 3) et à au moins une charge d'une mémoire numérique correspondante (110) qui comprend elle-même des informations d'identification correspondantes sous la forme d'un nombre numérique unique (201) qui est compris dans le signal de système correspondant (204), permettant ainsi la détermination du convertisseur de puissance qui a généré le signal de système (204) lorsqu'il est détecté dans le système (1).

11. Procédé selon la revendication 10, **caractérisé en ce que** l'au moins une charge, constituée d'un dispositif de consommation de puissance (16), est utilisée pour générer un signal de système (204) avec des informations d'identification sous la forme d'un nombre numérique unique (201) qui permet la détermination de la charge qui a généré ledit signal de système (204) lorsque ledit signal de système (204) est détecté dans le système (1).

12. Procédé selon l'une quelconque des revendications 10 ou 11, **caractérisé en ce que** l'au moins un convertisseur de puissance (2, 3) et l'au moins une charge sont utilisés pour extraire des informations d'identification sous la forme d'un nombre numérique unique (201).

13. Procédé selon la revendication 12, **caractérisé en ce qu'**une unité de commande (10) est utilisée pour recueillir les informations d'identification extraites sous la forme d'un nombre numérique unique (201).

14. Procédé selon la revendication 13, **caractérisé en ce que** l'unité de commande (10) est utilisée pour déterminer la configuration de connexion des convertisseurs de puissance dans le système au moyen d'une analyse de chaque signal de système détecté.

15. Procédé selon la revendication 14, **caractérisé en ce que** l'unité de commande (10) est utilisé pour déterminer des fonctions de transfert de tension, de courant et/ou d'impédance entre des positions différentes dans le système.
